(19) Europäisches Patentamt / European Patent Office / Office européen des brevets

(11) **EP 3 493 546 A1**

(12) **EUROPEAN PATENT APPLICATION**

(43) Date of publication:
05.06.2019 Bulletin 2019/23

(51) Int Cl.:
*H04N 19/597* (2014.01)  *G06T 15/04* (2011.01)
*H04N 19/59* (2014.01)  *G06T 3/00* (2006.01)

(21) Application number: 17306669.7

(22) Date of filing: 30.11.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **THOMSON LICENSING**
**92130 Issy les Moulineaux (FR)**

(72) Inventors:
• **GALPIN, Franck**
**35576 Cesson-Sévigné (FR)**
• **RACAPE, Fabien**
**35576 Cesson-Sévigné (FR)**
• **FRANCOIS, Edouard**
**35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **METHOD AND APPARATUS FOR ENCODING AN OMNIDIRECTIONAL VIDEO**

(57) The present disclosure relates to a method and apparatus to convert omnidirectional frames encoded according to an input mapping, for example equirectangular mapping, into frames according to an output mapping, for instance cube mapping. The method determines an interpolated value for a pixel of a first frame, that is an output mapping of an omnidirectional frame, by
- projecting the pixel from the first frame onto a second frame, that is an input mapping of the omnidirectional frame and obtaining a projected point in the second frame,
- selecting a set of neighboring pixels of the projected point according to geometric distortion induced by converting the output mapping into the input mapping,
- filtering the adapted set of neighboring pixels to determine the interpolated value for the pixel.

FIG. 8

**Description**

**1. Technical Field**

The technical field of the disclosure is the compression of immersive videos, such as 360° omnidirectional videos. More particularly, the disclosure is directed to a method for interpolating a frame of an output mapping of an omnidirectional video from an input mapping of the omnidirectional video.

**2. Background**

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. Although a user can navigate within the content by various means such as head movement, mouse movement, touch screen, voice and the like. A large field-of-view content may be, among others, a three-dimension computer graphic imagery scene (3D CGI scene), a point cloud or an immersive video.

Many terms might be used to design such immersive videos: Virtual Reality (VR), 360, panoramic, $4\pi$ steradians, immersive, omnidirectional, large field of view, etc.

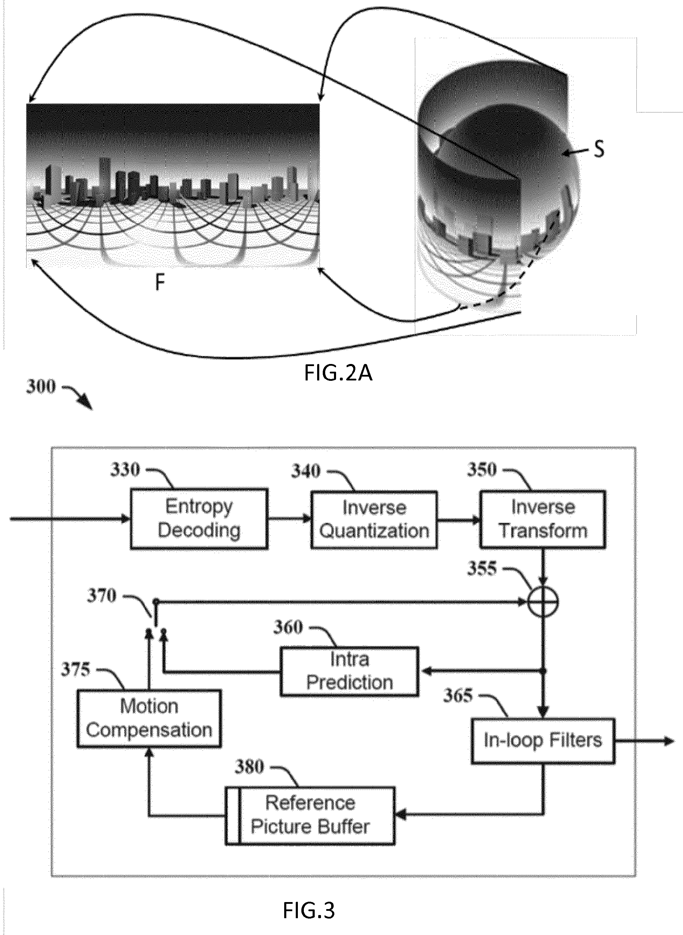

For coding an omnidirectional video into a bitstream, for instance for transmission over a data network, traditional video codec, such as HEVC, H.264/AVC, could be used. Each picture of the omnidirectional video is thus first projected on one or more 2D pictures, for example one or more rectangular pictures, using a suitable projection function. In practice, a picture from the omnidirectional video is represented as a 3D surface. For ease of projection, usually a convex and simple surface such as a sphere, or a cube, or a pyramid are used for the projection. The projected 2D pictures representative of the omnidirectional video are then coded using a traditional video codec. FIG 2A shows an example of projecting a frame of an omnidirectional video mapped on a surface S represented as a sphere onto one rectangular picture F using an equi-rectangular projection (ERP).

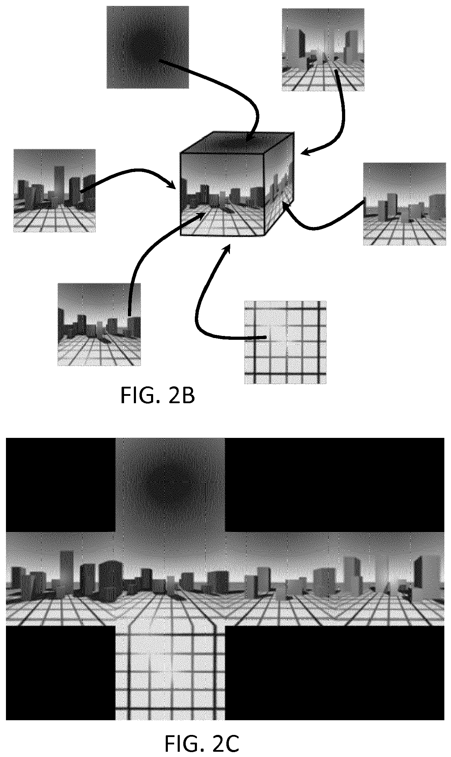

FIG. 2B shows another example of projecting a frame of an omnidirectional video mapped on a surface S, here represented as a cube, onto six pictures or faces. The faces can possibly be rearranged into one rectangular picture as shown in FIG. 2C. Such a projection is also known as Cube Mapping Projection (CMP).

The projection of the 3D surface on one or more rectangular pictures inevitably introduces some effects that may impact the compression efficiency when encoding the resulting video. Indeed the projection may introduce the followings effects:

- Strong geometry distortions:

    - straight lines are not straight anymore,
    - orthonormal coordinate system are not orthonormal anymore

- Non uniform pixel density: a pixel in the picture to encode does not always represent the same surface on the surface to encode (e.g. a pole of a sphere may be represented by a line of pixels in the 2D image),
- Strong discontinuities: the picture layout may introduce strong discontinuities between 2 adjacent pixels on the surface,
- Some periodicity may occur in the picture (for example from one border to the opposite one).

When the source video sequence to encode is not in a suitable mapping for the codec (for example the source video sequence is in ERP but the codec expects a CMP mapping), or when core coding tools use local transformation of a block of pixels from a mapping to another, the points of the source video sequence need to be "remapped" in a suitable mapping and interpolation occurs.

Such interpolation usually uses state-of-the-art filter, for example Lanczos-3 in current JVET-VR CTC (Joint Video Exploratory Virtual Reality Common Test Conditions, JVET-D1030 JVET common test conditions and evaluation procedures for 360° video, October 2016), but such filter might not be optimal..

**3. Summary**

According to an aspect of the present principle, a method for determining an interpolated value for a pixel of a first frame, that is an output mapping of an omnidirectional frame is disclosed. Such a method comprises:

- projecting the pixel of the first frame onto a second frame, that is an input mapping of the same omnidirectional frame and obtaining a projected point in the second frame,
- selecting a set of neighboring pixels of the projected point according to geometric distortion induced by converting the output mapping into the input mapping, and
- filtering the adapted set of neighboring pixels to determine the interpolated value for the pixel.

According to another aspect of the present principle, selecting a set of neighboring pixels is performed by:

- projecting a set of pixels from the first frame onto the second frame. The set of pixels is determined as a set of NxN pixels centered on the pixel in the first frame, where N is an integer determined by a symmetric interpolation filter size,
- computing at least a horizontal span or a vertical span in the second frame from the projected set of pixels.

According to another aspect of the present principle, The method according to claim 2, wherein said horizontal and vertical spans are computed once for all the pixels of the first frame and stored in a Look-Up-Table.

According to another aspect of the present principle, the method further comprises computing a mipmap pyramid of the second frame. Selecting a set of neighboring pixels comprises:

- selecting a mipmap level for the pixel according to a scale of the projected point,
- determining location of a pixel corresponding to the projected point at the selected mipmap level,
- determining the set of neighboring pixels as a set of NxN pixels centered on a pixel corresponding to the projected point at the selected mipmap level, in the second frame, N being an integer determined by a symmetric interpolation filter size.

According to another aspect of the present principle, if the scale of a projected point only depends on a position of the projected point along the vertical axis, the method comprises computing the mip-map pyramid comprises filtering the second frame only along the horizontal axis.

According to another aspect of the present principle, mipmap level and locations of a pixel corresponding to the projected point at the selected mipmap level are computed once for all the pixels of the first frame and stored in a Look-Up-Table.

According to another aspect of the present principle, selecting a set of neighboring pixels comprises back-projecting a set of pixels from the second frame onto the first frame. The set of pixels is determined as a set of NxN pixels centered on the nearest pixel from the projected point in the second frame, N being an integer determined by a symmetric interpolation filter size. The interpolated value for the pixel is obtained by filtering the back-projected set of pixels using an overlapping filter.

According to another aspect of the present principle, selecting a set of neighboring pixels comprises:

- back-projecting a set of pixels from the second frame onto the first frame, the set of pixels being determined as a set of NxN pixels centered on the nearest pixel from the projected point in the second frame, N being an integer determined by a symmetric interpolation filter size,
- determining the set of neighboring pixels in the first frame by rectifying positions of the back-projected set of pixels using an affine transformation.

The present disclosure also relates to a method for omnidirectional video encoding comprising:

- processing frames of the omnidirectional video for converting said frames from an input mapping into an output mapping, wherein said processing is performed using the above method according to any aspect of the present principles,
- encoding the omnidirectional video in the output mapping.

The present disclosure also relates to a method for omnidirectional video decoding comprising:

- decoding a bitstream representative of the omnidirectional video in an input mapping,
- processing frames of the decoded omnidirectional video for converting the frames from the input mapping into an output mapping, wherein said processing is performed using the above method according to any aspect of the present principles.

The present disclosure also relates to an apparatus for determining an interpolated value for a pixel of a first frame, said first frame being an output mapping of an omnidirectional frame, the apparatus comprising:

- means for projecting said pixel from said first frame onto a second frame, said second frame being an input mapping of the omnidirectional frame and obtaining a projected point in the second frame,
- means for selecting a set of neighboring pixels of the projected point according to geometric distortion induced by converting the output mapping into the input mapping,
- means for filtering the adapted set of neighboring pixels to determine the interpolated value for the pixel.

In an embodiment, selecting a set of neighboring pixels comprises:

- projecting a set of pixels from the first frame onto the second frame, said set of pixels being determined as a set of NxN pixels centered on the pixel in the first frame, N being an integer determined by a symmetric interpolation filter size,
- computing at least a horizontal span or a vertical span in the second frame from the projected set of pixels.

In an embodiment, the apparatus further comprises means for encoding an omnidirectional video in the output mapping or means for decoding an omnidirectional video in the input mapping.

In an embodiment, the apparatus is embedded in an encoder configured for encoding an omnidirectional video in the output mapping.

In an embodiment, the apparatus is embedded in a decoder configured for decoding an omnidirectional video in the input mapping.

One or more of the present embodiments also provide a computer readable storage medium having stored thereon instructions for interpolating a pixel, or encoding an omnidirectional video or decoding an omnidirectional video, according to any one of the methods described above. The present embodiments also provide a computer program product including instructions for performing any one of the methods described

## 4. Brief Description of Drawings

FIG. 1 illustrates a block diagram of an embodiment of an HEVC (High Efficiency Video Coding) video encoder according to an embodiment of the present disclosure.

FIG. 2A illustrates an EquiRectangular mapping of an omnidirectional video onto a sphere.

FIG. 2B illustrates a Cube Mapping of an omnidirectional video, and FIG. 2C illustrates the resulting picture to encode according to an example layout of the cube's faces.

FIG. 3 illustrates a block diagram of an embodiment of an HEVC video decoder according to an embodiment of the present disclosure.

FIG. 4 and 5 illustrate a classical interpolation method to create a destination mapping picture from a source mapping picture of an omnidirectional video.

FIG. 6A and 6B illustrates the effect of geometric distortion for one pixel in a CMP mapping and a corresponding projection of the pixel in an ERP mapping according to the location of the pixel.

FIG. 7 and 8 illustrate an example method for interpolating a pixel, according to an embodiment of the present disclosure.

FIG. 9 and 10 illustrate an example method for interpolating a pixel, according to another embodiment of the present disclosure.

FIG. 11 illustrates an example picture of an ominidirectional video projected using an ERP mapping.

FIG. 12 illustrates a CMP mapping of the example picture illustrated in FIG. 11.

FIG. 13 illustrates scale variation of pixel of CMP mapping.

FIG. 14 illustrates an example method for mipmap generation speedup.

FIG. 15 and 16 illustrate an example method for interpolating a pixel, according to another embodiment of the present disclosure.

FIG. 17 and 18 illustrate an example method for interpolating a pixel, according to another embodiment of the present disclosure.

FIG. 19 illustrates an example method for encoding an omnidirectional video according to an embodiment of the present disclosure.

FIG. 20 illustrates an example method for decoding an omnidirectional video according to an embodiment of the present disclosure.

FIG. 21 illustrates an example apparatus for encoding an omnidirectional video according to an embodiment of the present disclosure.

FIG. 22 illustrates an example apparatus for decoding an omnidirectional video according to an embodiment of the present disclosure.

FIG. 23 illustrates an example structure of a bitstream carrying encoded date of an omnidirectional video.

## 5. Description of embodiments

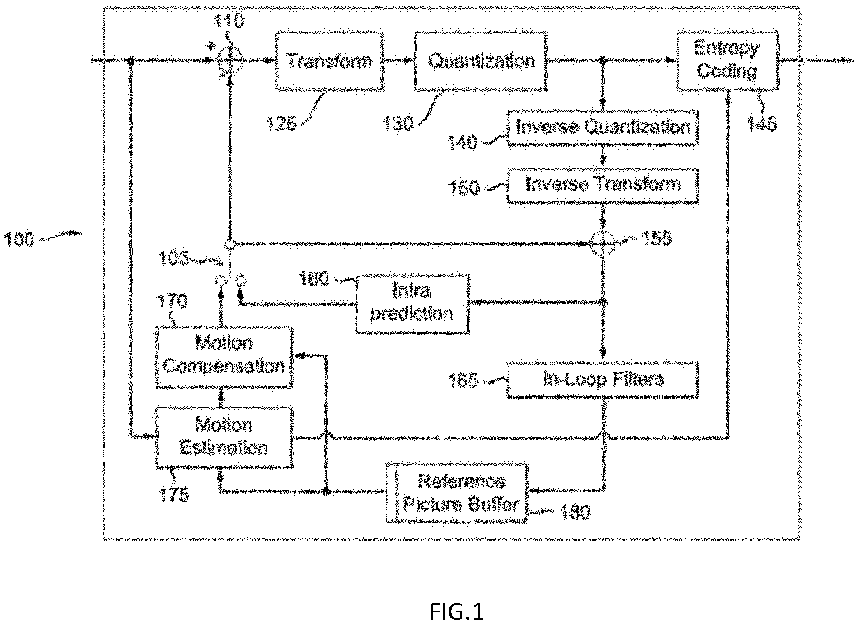

FIG. 1 illustrates an exemplary video encoder 100 wherein the present disclosure may be implemented. For instance, the exemplary video encoder 100 is an High Efficiency Video Coding (HEVC) encoder. HEVC is a compression standard developed by Joint Collaborative Team on Video Coding (JCT-VC) (see, e.g., "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265").

The video encoder 100 encodes a video sequence with one or more pictures, a picture is partitioned into one or more slices where each slice can include one or more slice segments. A slice segment is organized into coding units, prediction units, and transform units.

In the present application, the terms "reconstructed" and "decoded" may be used interchangeably, the terms "encoded" or "coded" may be used interchangeable, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. In the case of sub-pixel accuracy of motion vectors, motion compensation may use interpolation filters to calculate interpolated values for sub-integer samples of a reference block.

The encoder decides (105) which one of the intra mode or inter mode to use for encoding the CU, and indicates the intra/inter decision by a prediction mode flag. Prediction residuals are calculated by subtracting (110) the predicted block from the original image block.

CUs in intra mode are predicted from reconstructed neighboring samples within the same slice. For an inter CU, the corresponding coding block is further partitioned into one or more prediction blocks. Inter prediction is performed on the PB level, and the corresponding PU contains the information about how inter prediction is performed.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 3 illustrates a block diagram of an exemplary HEVC video decoder 300. In the exemplary decoder 300, a bitstream is decoded by the decoder elements as described below. Video decoder 300 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (330) to obtain transform coefficients, motion vectors, and other coded information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In the case of sub-pixel accuracy of the motion vectors, motion compensation may use interpolation filters to calculate interpolated values for sub-integer samples of a reference block. In-loop filters (365) are applied to the reconstructed image. The filtered image is stored at a reference picture buffer (380).

The example encoder and decoder discussed above may be used to encode and decode 2D pictures obtained from the projection of omnidirectional videos. However, when the source video sequence to encode is not in a suitable mapping for the codec, for example the source video sequence is in ERP but the codec expects a CMP mapping, or when core coding tools use local transformation of a block of pixels from a mapping to another, the samples of the source video sequence need to be "remapped" in a suitable mapping and interpolation occurs.

In a variant, the input mapping is suitable for the codec and the conversion from the input mapping into the output mapping is performed in core of the video codec. In this variant, the codec takes a video sequence in an input mapping, for instance ERP mapping, as input and outputs an encoded or decoded video sequence in an output mapping, for example CMP mapping.

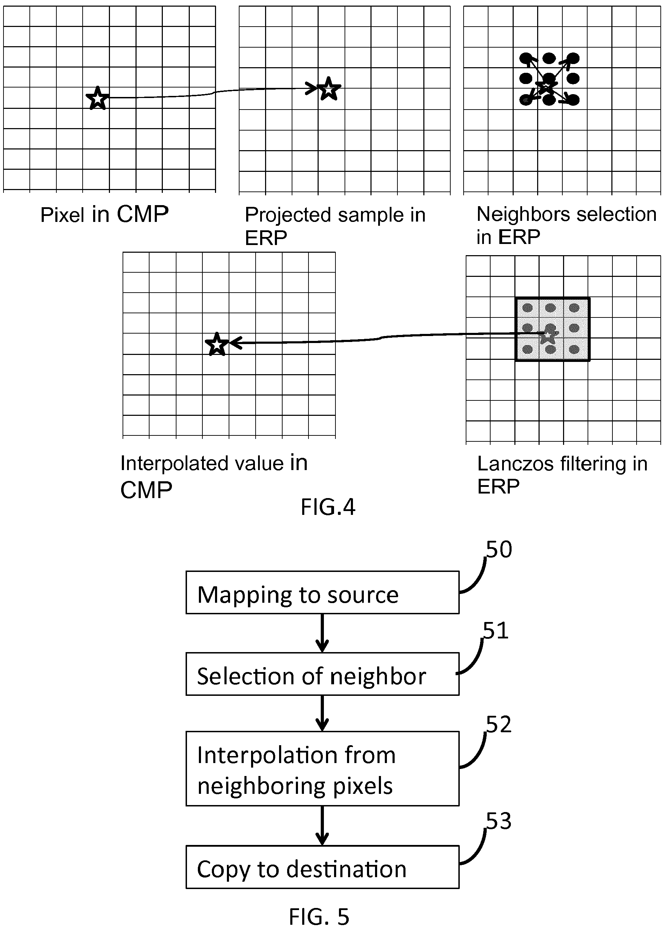

FIG. 4 and 5 illustrate a classical interpolation method to create a destination mapping picture from a source mapping picture of an omnidirectional video. The process is discussed here in the case of an equirectangular source (ERP) and a cube mapping (CMP) destination. However, the principle disclosed herein is not limited to these embodiments and the principle applies to any other kind of omnidirectional video mapping.

The following process is carried out for each pixel of the CMP picture.

In step 50, a current pixel is projected on the ERP picture. A projected point in the ERP picture corresponding to the pixel in the CMP picture is thus obtained. Such a step is typically applies for luma (Y) and chroma (Cb, Cr) components.

In step 51, pixels neighboring the projected point are selected. As the coordinates of the projected point in ERP are not aligned on the pixel grid, a neighborhood of the projected point in the ERP picture is chosen. In prior-art, the shape of the neighborhood is fixed, for example the closest 3x3 pixels.

In step 52, an interpolation filter, for example a Lanczos filter, is used to compute the sub-pixel value of the projected point in ERP. In prior-art, the shape of the filter is also fixed, for instance a 6-tap Lanczos filter is used.

In step 53, the value computed at step 52 is copied to the pixel in CMP picture.

One issue with this interpolation process is that it does not consider the geometric distortion of the image induced by the mapping from one representation to another.

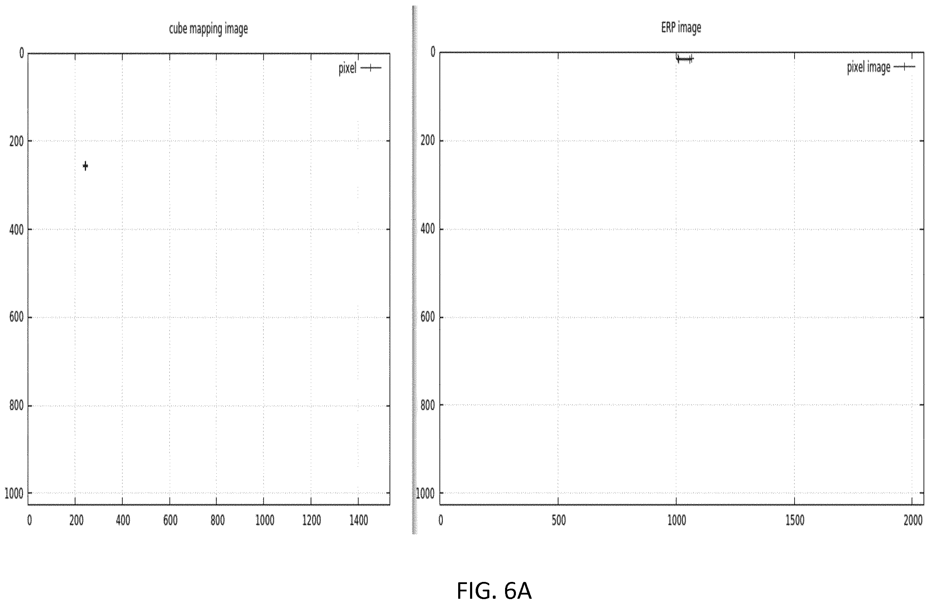

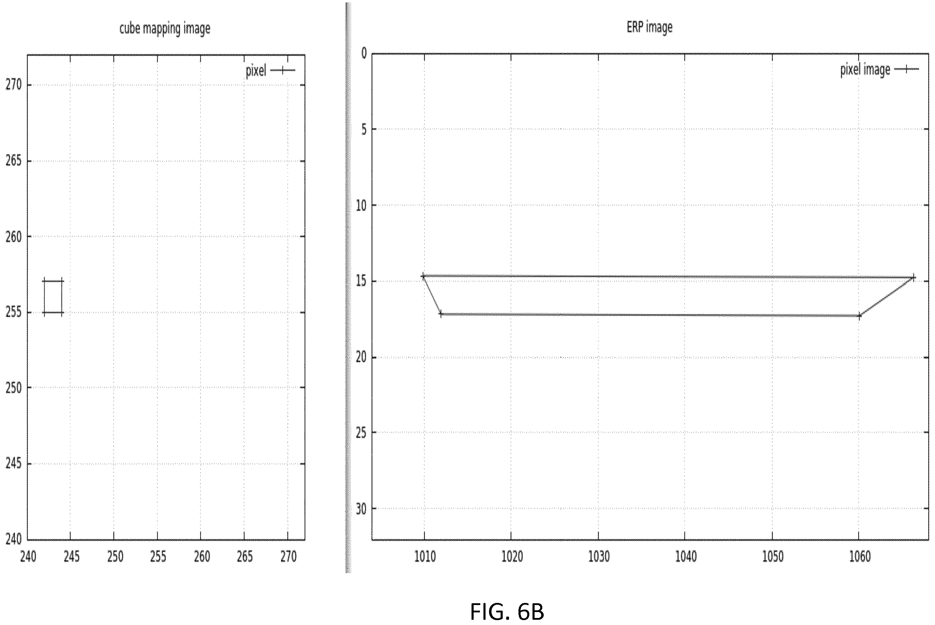

FIG. 6A and 6B illustrate the effect of the geometric distortion when transforming a pixel from one space (here CMP space) to another space (here ERP space). On the left of FIG. 6A and 6B, a square pixel of size 1 in CMP becomes distorted in ERP space (on the rightof FIG. 6A and 6B), especially along the horizontal axis.

According to the principle disclosed herein, the filtering process is adapted to take into account such distortions. Thus, the distortion resulting from the mapping from one representation to another is reduced. To do so, the set of neighboring pixels of the projected point selected at step 51 and the filtering at step 52 are adapted.

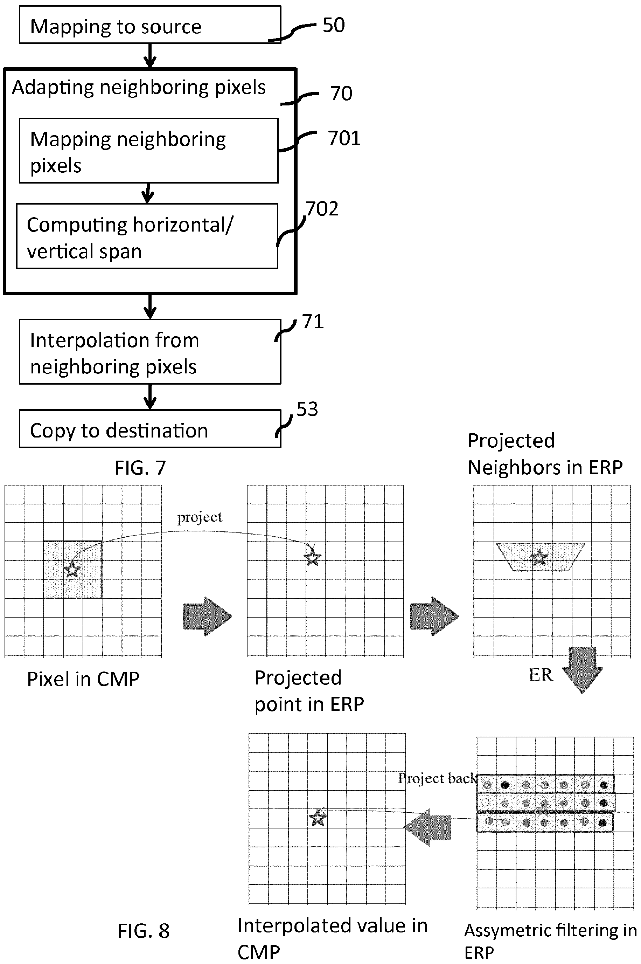

FIG. 7 and 8 illustrate an example method for interpolating a pixel of a frame of an omnidirectional video, according to an embodiment of the present disclosure.

Here, the shape (e.g. number of taps) of the filter used in steps 51 and 52 in the ERP frame is adapted by considering the geometric distortion of the pixel from CMP to ERP space. Compared to the examplary method from FIG. 4 and 5, only steps 51 and 52 are modified to apply an adaptive neighboring pixels selection and filtering. The other steps are not modified.

In step 70, the set of neighboring pixels of the projected point is adapted by taking into account geometric distortion induced by the projection from the CMP mapping to the ERP mapping.

According to an embodiment, step 70 comprises the following steps.

In step 701, given a neighboring size, for example 3x3, each corner of the filter centered on the current pixel in CMP space, is sent to the ERP space:

$$q0 = f(p(x,y))$$

$$q1 = f(p(x-1,y-1))$$

$$q2 = f(p(x+1,y-1))$$

$$q3 = f(p(x-1,y+1))$$

$$q4 = f(p(x+1,y+1))$$

where f(p) is the mapping function that relates pixel p(x,y) in the CMP frame to pixel q0=f(p) in the ERP frame- preferably this function returns positions aligned with the ERP frame grid, and qk, k = 1 to 4 are the projected point in ERP space corresponding to each corner of the neighboring set of pixels in the CMP space.

In other words, in step 701, a set of neighboring pixels of the current pixel in the CMP frame is projected on the ERP frame. The set of neighboring pixels of the current pixel in the CMP frame is determined as a set of NxN pixels centered on the current pixel. For instance, a 3x3 neighboring pixels set is used. For instance, N is selected according to a symetric interpolation filter size.

In step 702, a horizontal span and a vertical span are computed in the ERP frame for the set of neighboring pixels projected in the ERP, such as:

$$x\_\{min\} = \arg x \min i \in [0\text{-}3] qi(x,y)$$

$$x\_\{max\} = \arg x \max i \in [0\text{-}3] qi(x,y)$$

$$y\_\{min\} = \arg y \min i \in [0\text{-}3] qi(x,y)$$

$$y\_\{max\} = \arg y \max i \in [0\text{-}3] qi(x,y)$$

Thus, an adapted set of neigboring pixels is obtained in the ERP frame).

In step 71, the adapted set of neigboring pixels is filtered, by applying classical filtering, for example Lancsoz, using an asymmetric filter which spans in s*[xmin,xmax] on the horizontal axis and s*[ymin,ymax] on the vertical axis, where s is an arbitrary scale factor dealing with the size of the filter in the ERP space.

According to an embodiment, as the mapping between the destination mapping and the source mapping is fixed, a 2D LUT giving the x-span and y-span may be pre-computed for each pixel position in the destination frame.

Hence, steps 701 and 702 have to be applied only once, and not for each frame to process. For each frame, the adaptive filter is then applied considering the horizontal and vertical filter size. This will advantageously reduce the complexity of the method.

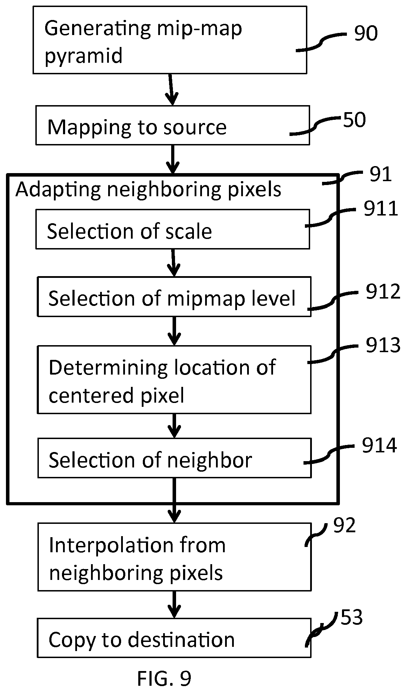

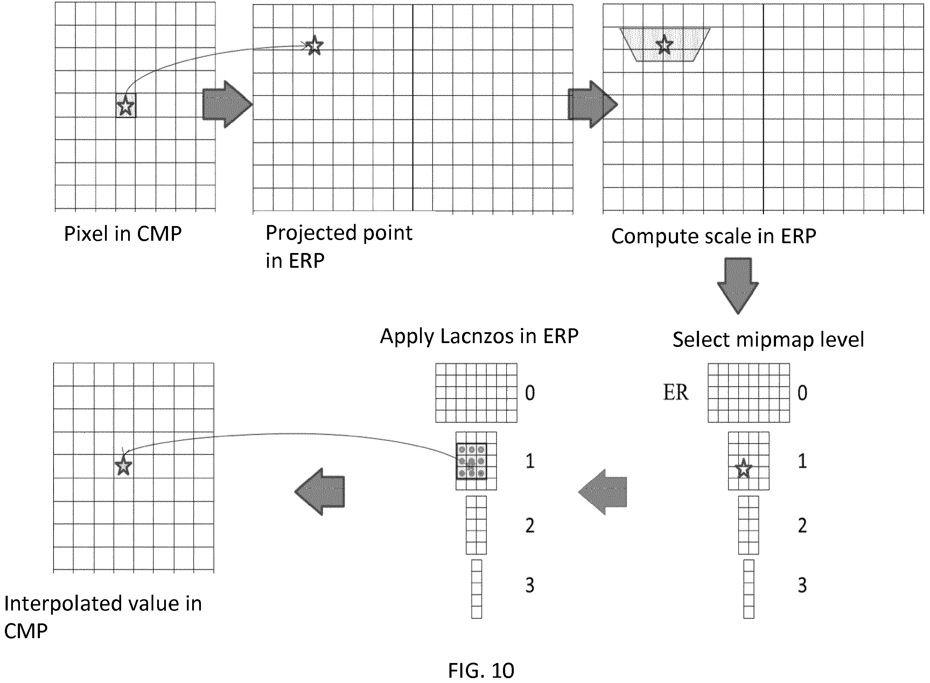

FIG. 9 and 10 illustrate an example method for interpolating a pixel of a frame of an omnidirectional video, according to another embodiment of the present disclosure. According to this embodiment, the idea is to get each point of the CMP space at the correct scale in the ERP image, without considering other geometric distortion.

According to this embodiment, a mipmap filtering process is used, wherein a pyramid of the source image is prepared at different scales, typically using a factor 2 between each scale. According to various variants, the pyramid for the source image may be obtained in two dimensions by filtering the source image independently along the horizontal axis and the vertical axis, providing a pyramid along the horizontal axis and a pyramid along the vertical axis, or by filtering the source image both along the horizontal axis and the vertical axis, or by filtering the source image only along the horizontal axis or only along the vertical axis, depending on the geometric distortions. For instance, in the case of CMP mapping projected on an ERP mapping, the scale of the projected point in ERP space only depends on the position of the pixel along the vertical axis as illustrated by FIG. 6A and 6B. Therefore, in that case, the pyramid may be generated by filtering the source image only along the horizontal axis.

According to the present embodiment, the classical mipmap filtering is adapted as follow:

> as the ERP format has scale change (in angular space) only along the vertical axis, we propose to adapt the mipmap filter by using a mipmap pyramid with an horizontal scaling only (FIG. 10 (d)).

The scale computation in ERP space is done by computing the horizontal scale of 1 pixel in CMP space. As the cube map has faces in different orientations, the horizontal scale in ERP is taken as the maximum horizontal span of a square pixel.

As the mapping is fixed during the whole process, a LUT table on the whole CMP frame can be pre-computed in order to give, for each pixel $p(x,y)$ in CMP, the mipmap level m and the coordinate in the mipmap level $q(x,y)$ of the projected and rescaled pixel p.

Compared to the example method from FIG. 4 and 5, steps 51 and 52 are modified to apply an adaptive neighboring pixels selection and filtering and step 90 for generating the mipmap pyramid is added. The other steps are not modified.

In step 90, the mipmap pyramid of the ERP frame is generated. Here, the ERP frame is only filtered along the horizontal axis as the vertical angular resolution is constant for ERP mapping. Step 90 is only performed once for each ERP frame.

In step 91, the set of neighboring pixels of the projected point is adapted by taking into account geometric distortion induced by the projection from the CMP mapping to the ERP mapping. More particularly, at step 911, the scale of the pixel p is computed. Here, the horizontal scale is computed. For example, from the horizontal span of a 3x3 neighboring as computed earlier, the scale can be deduced as $s = (x_{max} - x_{min})/3$, i.e. the change in horizontal scale of the projected window.

In the case where the scale of the pixel p varies horizontally and vertically, a horizontal scale and a vertical scale are computed and the lowest scale is selected.

At step 912, the mipmap level corresponding to the computed scale is selected. The mipmap level allows to identify the filtered source frame(s) to be used for computing the interpolated value. This step corresponds to selecting a spatial neighborhood in the pyramid level.

At step 913, the location of a pixel at the selected mipmap level corresponding to the projected point.

At step 914, the set of neighboring pixels is selected according to the interpolation filter size. Using the mipmap pyramid allows to use symmetric interpolation filter. Thus, the st of neighboring pixels is selected as a set of NxN pixels centered on the pixel at the selected mipmap level corresponding to the projected point. For instance, a 3x3 neighborhood is selected.

At step 92, a value is interpolated for the current pixel using the selected set of neighboring pixels in the ERP frame. Here, a fixed-size filter can be applied to the specific mipmap image selected in step 912.

In order to speed-up, the method discussed above, the mipmap filtering may be carried out as a preprocess using a Look-Up-Table (LUT) as follows.

The mipmap pyramid is generated (step 90), in the example given here, only horizontal scaling is performed as the vertical angular resolution is constant for ERP mapping. Then, for each pixel of the CMP frame, the pixel is projected in the ERP frame, the horizontal scale of the pixel is computed and the corresponding mipmap level is selected. A LUT is then stored in memory giving for each pixel p in the CMP frame, the mipmap level and the coordinate in the mipmap level q of the projected and rescaled pixel p. According to this variant, steps 911, 912, and 913 are only performed once for the whole omnidirectional video.

In the example given above, the mipmap level only depends on the vertical location of the pixel.

In the case of a projection from a CMP source mapping onto an ERP destination mapping, the LUT is function of the location of the pixel in the source mapping but also of the face onto which the pixel is projected.

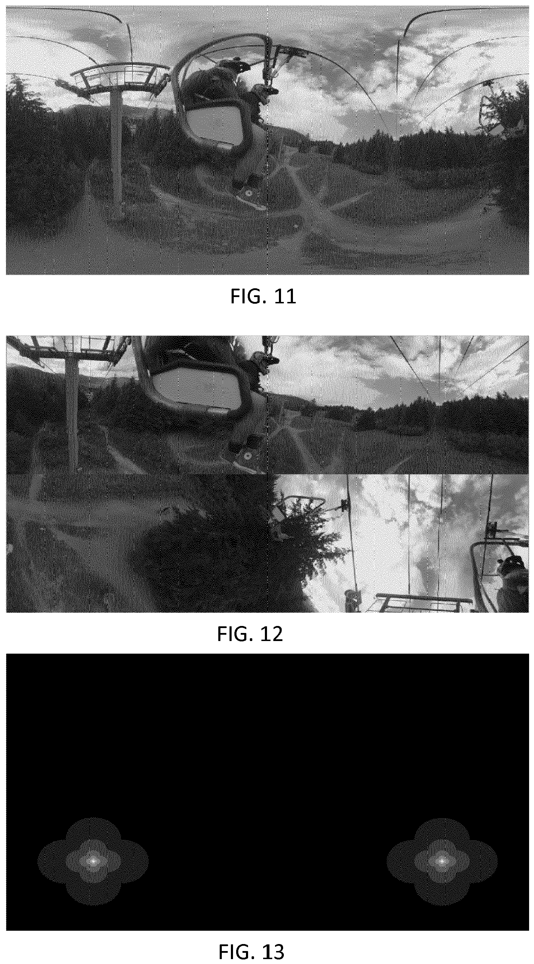

FIG. 11 and FIG. 12 show example ERP and CMP images. FIG. 13 shows the pre-computed mipmap level for each pixel of the CMP image. On FIG. 13, pixels in black correspond to a mipmap level equals to 0, then mipmap level increases as the color goes from dark gray to white.

One can notice that for a large part of the image, the source image (pixels at mipmap level 0, black pixels on FIG. 13) is used as it corresponds to pixels near the equator in ERP representation. However, for pixels located at top and bottom (bottom left and bottom right in the CMP image), the mipmap level increases.

Advantages of using a mipmap filtering are that the interpolation method is less complex than using a very large filter on the whole image, as can possibly done in the embodiment disclosed previously. For instance, a pixel in the CMP space may correspond to a whole line of pixels at th pole in the ERP space, therefore leading to a very large asymmetric filter to use.

The mipmap filtering also allows to adapt to the local scale of each pixel.

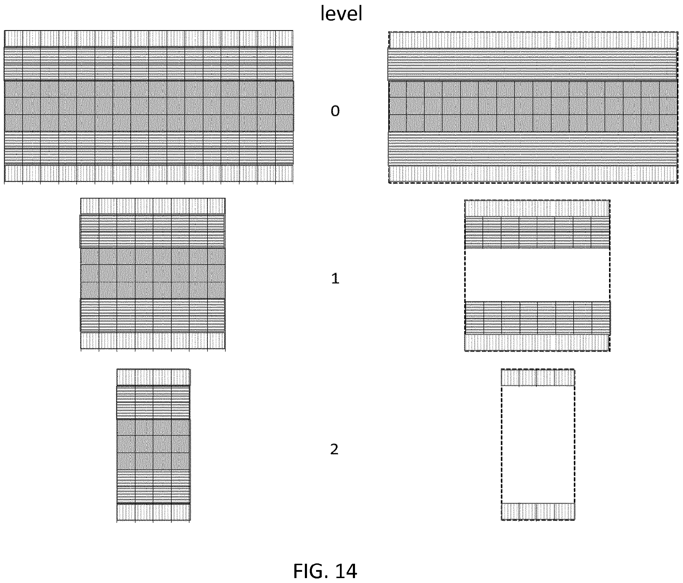

FIG. 14 illustrates an example method for mipmap generation speedup. According to this embodiment, it is assumed that the scale at equator for the ERP mapping and in the CMP frames is the same. If this is not the case, then a mipmap level shift is needed, however the present embodiment is still applicable.

According to this embodiment, the mipmap pyramid building (step 90) can be speed-up by skipping parts of the ERP frame which are not concerned by a particular mipmap level (i.e. scale). In FIG. 14, on the left part, a classical mipmap generation process is shown, with scaling only on the horizontal direction. On the right part, only the areas at each level of the mipmap pyramid which are used during the interpolation process are shown. The parts of the input frame that are not used are shown in white. For example, at level 0, the source image is used for pixels at equator (see FIG. 13), those pixels correspond here to the part filled with grey squares in FIG. 14. On the other hand, pole areas (shown with vertical hash in FIG. 14) are only used for higher mipmap level, level 2 in the example of FIG. 14.

To speed-up the mipmap generation, mipmap filtering is skipped for some pixels of the input frame using the observations given above.

Other variants for the embodiments using the mipmap pyramid of the input frame are also possible.

According to a variant, the scale of each pixel can be computed in a floating or fractional format and a filtering on the scale can also be used. According to this variant, each pixel in the CMP space, is projected in the ERP space. The scale s for that pixel is thus obtained as a floating point value. In that case, the mipmap levels corresponding to the rescaled pixel are selected as $\left\lceil s \right\rceil$ and $\left\lceil s \right\rceil + 1$, that is by selecting the mipmap levels below and above the scale of the pixel.

The filtering to get the interpolated value for the pixel is thus performed using mipmap levels $\left\lceil s \right\rceil$ and $\left\lceil s \right\rceil + 1$, resulting in values v0 and v1. Then, a linear interpolation between v0 and v1 is performed, using weighting depending on the distance between s and each mipmap level, for example $1 - (s - \left\lceil s \right\rceil)$ and $(s - \left\lceil s \right\rceil)$.

This variant allows a more accurate (decimal) scale.

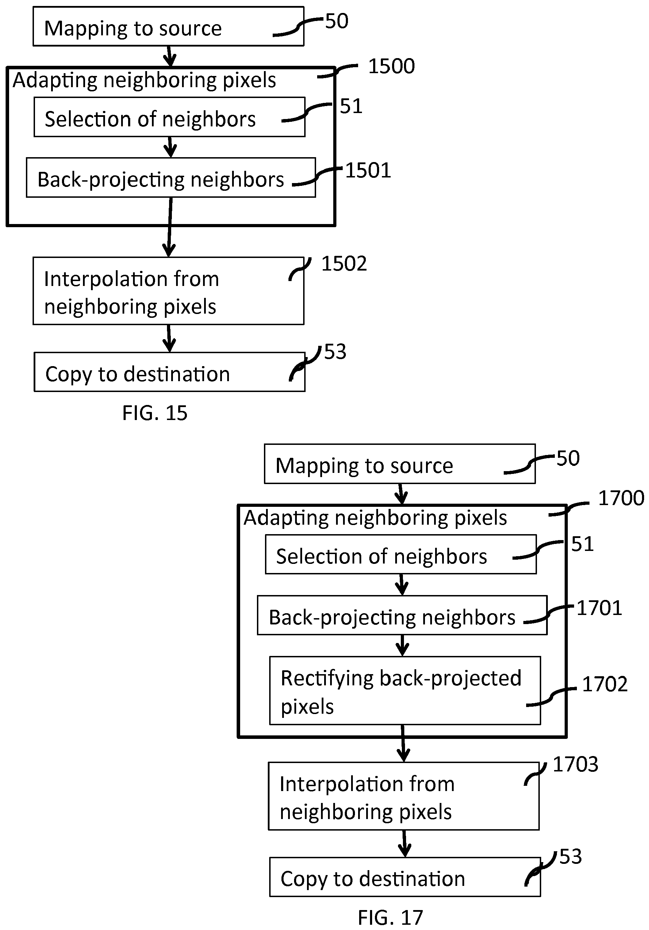

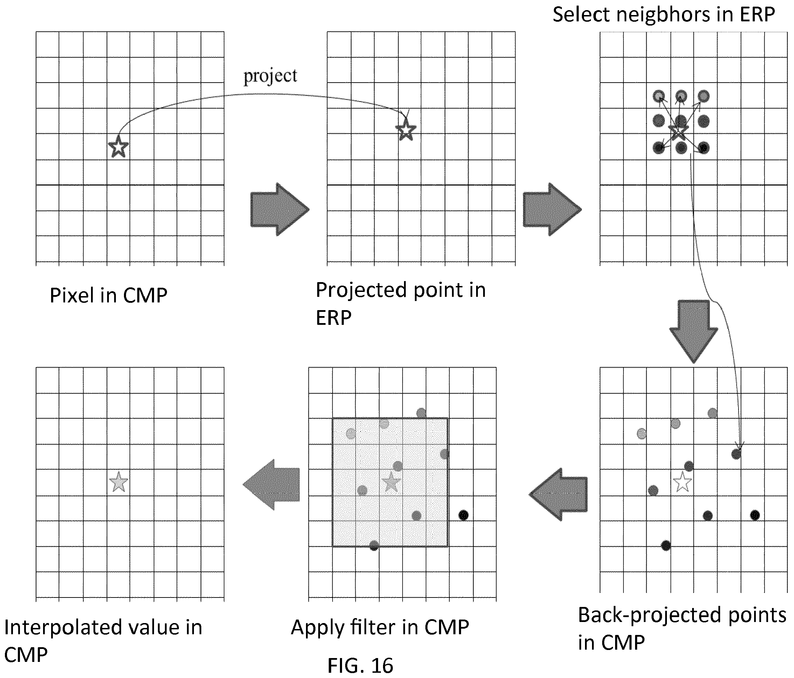

FIG. 15 and 16 illustrate an example method for interpolating a pixel of a frame of an omnidirectional video, according to another embodiment of the present disclosure.

In this embodiment, step 51 from FIG. 5 is not modified, that is the local neighborhood of the projected pixel in the ERP space is selected in the classical way. For instance, a set of 3x3 neighborhood is selected.

At step 1501, the neighborhood of the projected pixel is adapted by back-projecting the local neighborhood of the projected pixel in the CMP space.

At step 1502, an overlapping filter is applied in the CMP space to compute the final value for the pixel. The positions of each point needed to interpolate the final value are the local neighboring pixels back-projected in the CMP space. The overlapping filter is determined by computing a fitting function whose points correspond to the back-projected neighboring pixels in the CMP space.

This embodiment allows to take into account geometric distortion by simulating a 3D projection of the ERP in the CMP space. The drawback is that it is expensive in terms of calculation to determine the fitting function.

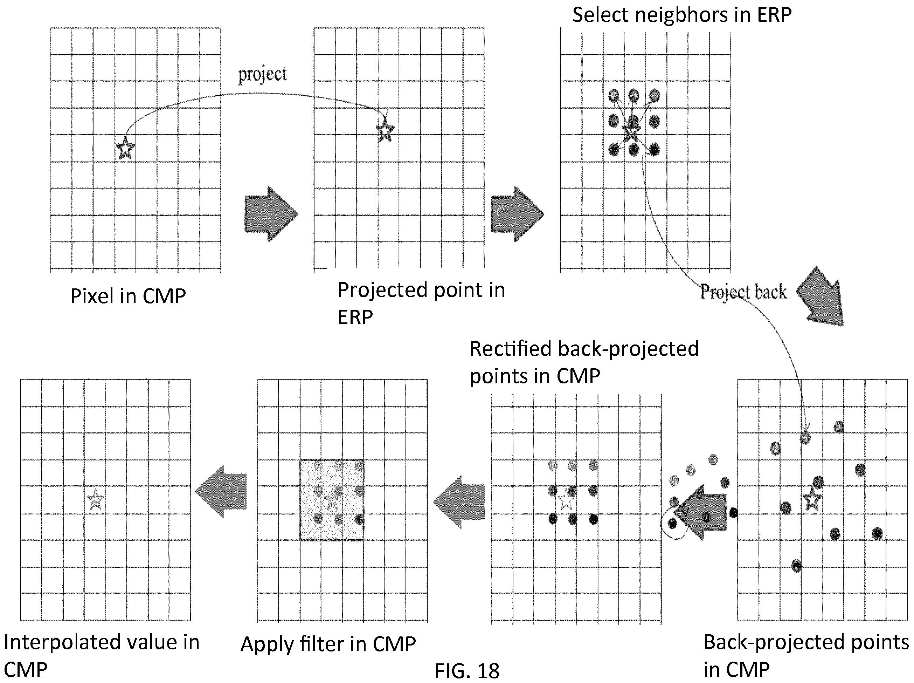

FIG. 17 and 18 illustrate an example method for interpolating a pixel of a frame of an omnidirectional video, according to another embodiment of the present disclosure.

In the embodiment disclosed with FIG. 15 and 16, the re-projected pixels do not lie on a regular grid, which introduces artifacts when using classical weighting of each point, for example the Lancsoz weighting.

According to the embodiment disclosed with FIG. 17 and 18, instead of applying an overlapping filter, at step 1702, the back-projected pixels are rectified using an affine or homographic transformation, such that all back-projected pixels lie on a regular grid.

As the points are not exactly aligned, the transformation is found using a least-squares criterion. The affine transform is constrained such that the source point is invariant.

At step 1703, a regular filter is then applied, for instance a Lanczos filter.

The present principle applies to any input/source and output mapping where large scale variations due to geometric distortion are expected. That is, the ERP representation used as input (source) here may be replaced by any other representation, and the CMP representation used as output here may be replaced by any other representation.

According to an embodiment, the method for interpolating a pixel disclosed above according to any one of the embodiments disclosed with FIG. 7-10, 14-18 may be integrated in a method for encoding and in a method for decoding an omnidirectional video. More particularly, the method for interpolating a pixel disclosed above may be used in any encoding/decoding step wherein remapping of the frame is needed. For instance, the method for interpolating a pixel disclosed above may be used in the motion compensation step for predicting inter block.

According to an embodiment, the method for interpolating a pixel disclosed above may be used by the motion compensation modules 170 and 375 from FIG. 1 and 3.

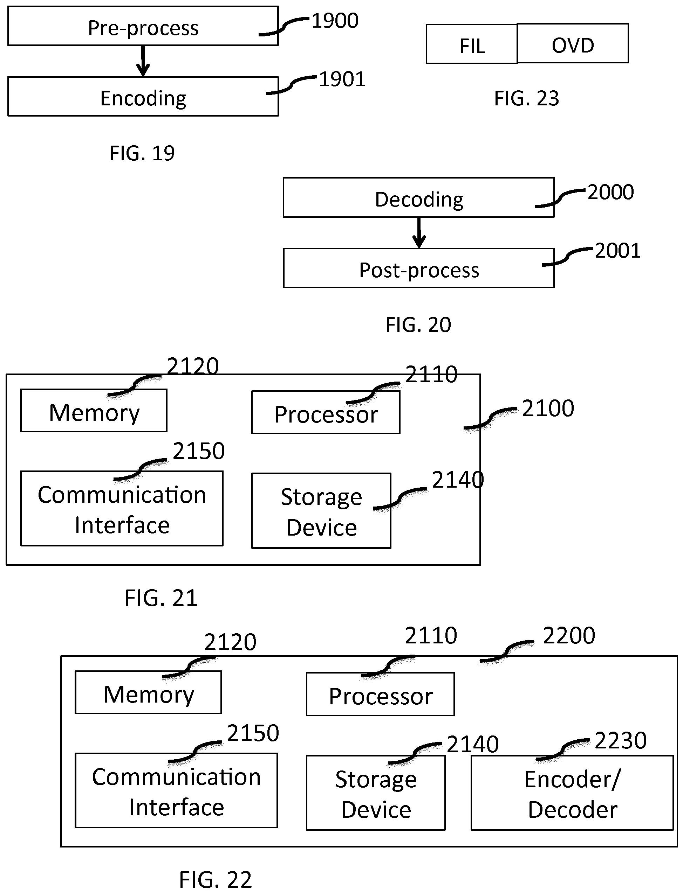

FIG. 19 illustrates an example method for encoding an omnidirectional video according to an embodiment of the present disclosure. The frames of the omnidirectional video are stored in an input mapping.

At step 1900, the omnidirectional video is preprocessed so that the frames of the omnidirectional video that are to be encoded are in an output mapping. According to this embodiment, each frame of the omnidirectional video is projected from the input mapping onto the output mapping, using any one of the embodiments for interpolating a pixel disclosed with FIG. 7-10, 14-18.

At step 1901, the omnidirectional video in the output mapping is encoded. For instance, the method disclosed with FIG. 1, or any other suitable encoding methods may be used.

According to this embodiment, it is possible to adapt the mapping of the frames of the omnidirectional video to the mapping that is used for encoding the frames, while limiting the geometric distortions that occurs when projecting the frames from one mapping to another, and thus improving image quality.

FIG. 20 illustrates an example method for decoding an omnidirectional video according to an embodiment of the present disclosure.

At step 2000, a bitstream representative of the omnidirectional video is decoded using for instance the decoding method disclosed in FIG. 3 or any other suitable decoding methods. The reconstructed frames of the omnidirectional video are in an input mapping.

At step 2001, the reconstructed omnidirectional video is post-processed. Each frame of the reconstructed omnidirectional video is projected from the input mapping onto an output mapping, using any one of the embodiments for interpolating a pixel disclosed with FIG. 7-10, 14-18. For instance, this embodiment allows adapting the mapping of the frames of the reconstructed omnidirectional video to a suitable mapping for displaying the reconstructed omnidirectional video.

According to a variant of the embodiments disclosed with FIG. 19 and 20, as dislclosed with FIG. 23, a message (FIL on FIG. 23) can be sent with the bitstream carrying encoded data (OVD on FIG. 23) of the omnidirectional video in order to signal the type of interpolation filters in use. Such message may for instance be an SEI message (Supplemental Enhancement Information message).

FIG. 21 illustrates an example apparatus for interpolating a pixel according to an embodiment of the present disclosure. FIG. 21 illustrates a block diagram of an exemplary system 2100 in which various aspects of the exemplary embodiments may be implemented. The system 2100 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. The system 2100 may be communicatively coupled to other similar systems, and to a display via a communication channel as shown in FIG. 21 and as known by those skilled in the art to implement all or part of the exemplary video systems described above.

Various embodiments of the system 2100 include at least one processor 2110 configured to execute instructions loaded therein for implementing the various processes as discussed above. The processor 2110 may include embedded memory, input output interface, and various other circuitries as known in the art. The system 2100 may also include at least one memory 2120 (e.g., a volatile memory device, a non-volatile memory device). The system 2100 may additionally include a storage device 2140, which may include non-volatile memory, including, but not limited to, EEPROM, ROM, PROM, RAM, DRAM, SRAM, flash, magnetic disk drive, and/or optical disk drive. The storage device 2140 may comprise an internal storage device, an attached storage device, and/or a network accessible storage device, as non-limiting examples.

Program code to be loaded onto one or more processors 2110 to perform the various processes described hereinabove may be stored in the storage device 2140 and subsequently loaded onto the memory 2120 for execution by the processors 2110. In accordance with the exemplary embodiments, one or more of the processor(s) 2110, the memory 2120, and the storage device 2140, may store one or more of the various items during the performance of the processes discussed herein above, including, but not limited to the input video, the decoded video, the bitstream, equations, formulas, matrices, variables, operations, and operational logic.

The system 2100 may also include a communication interface 2150 that enables communication with other devices via a communication channel. The communication interface 2150 may include, but is not limited to a transceiver configured to transmit and receive data from the communication channel. The communication interface 2150 may include, but is not limited to, a modem or network card and the communication channel 2150 may be implemented within a wired and/or wireless medium. The various components of the system 2100 may be connected or communicatively coupled together (not shown) using various suitable connections, including, but not limited to internal buses, wires, and printed circuit boards.

The exemplary embodiments may be carried out by computer software implemented by the processor 2110 or by hardware, or by a combination of hardware and software. As a non-limiting example, the exemplary embodiments may be implemented by one or more integrated circuits. The memory 2120 may be of any type appropriate to the technical environment and may be implemented using any appropriate data storage technology, such as optical memory devices, magnetic memory devices, semiconductor-based memory devices, fixed memory, and removable memory, as non-limiting examples. The processor 2110 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

FIG. 22 illustrates an example apparatus 2200 for encoding or decoding an omnidirectional video according to an embodiment of the present disclosure. The example apparatus 2200 is similar to the apparatus disclosed with FIG. 21. Additionally, the apparatus 2200 comprises an encoder or decoder module 2230. The encoder/decoder module 2230 represents the module(s) that may be included in a device to perform the encoding/decoding functions. As is known, such a device may include one or both of the encoding/decoding modules. Additionally, the encoder/decoder module 2230 may be implemented as a separate element of the system 2200 or may be incorporated within one or more processors 2210 as a combination of hardware and software as known to those skilled in the art.

Furthermore, one skilled in the art may readily appreciate that the encoder/decoder module 2230 may be adapted according to the above teachings of the present disclosure in order to implement the disclosed improvements to the exiting video coding standards for achieving better compression/decompression. For example, motion compensation may be modified according to the disclosed teachings to implement one or more exemplary aspects of the present disclosure.

**Claims**

1. A method for determining an interpolated value for a pixel of a first frame, said first frame being an output mapping of an omnidirectional frame, the method comprising:

   - projecting said pixel from said first frame onto a second frame, said second frame being an input mapping of the omnidirectional frame and obtaining a projected point in the second frame,
   - selecting a set of neighboring pixels of the projected point according to geometric distortion induced by converting the output mapping into the input mapping,
   - filtering the adapted set of neighboring pixels to determine the interpolated value for the pixel.

2. The method according to claim 1, wherein selecting a set of neighboring pixels comprises:

   - projecting a set of pixels from the first frame onto the second frame, said set of pixels being determined as a set of NxN pixels centered on the pixel in the first frame, N being an integer determined by a symmetric interpolation filter size,
   - computing at least a horizontal span or a vertical span in the second frame from the projected set of pixels.

3. The method according to claim 2, wherein said horizontal and vertical spans are computed once for all the pixels of the first frame and stored in a Look-Up-Table.

4. The method according to any one of claims 1-3, further comprising computing a mip-map pyramid of the second frame, and wherein selecting a set of neighboring pixels comprises:

   - selecting a mipmap level for the pixel according to a scale of the projected point,
   - determining location of a pixel corresponding to the projected point at the selected mipmap level,
   - determining said set of neighboring pixels as a set of NxN pixels centered on a pixel corresponding to the projected point at the selected mipmap level, in the second frame, N being an integer determined by a symmetric interpolation filter size.

**5.** The method according to claim 4, wherein if the scale of a projected point only depends on a position of the projected point along the vertical axis, computing the mip-map pyramid comprises filtering the second frame only along the horizontal axis.

**6.** The method according to claims 4 or 5, wherein mipmap level and locations of a pixel corresponding to the projected point at the selected mipmap level are computed once for all the pixels of the first frame and stored in a Look-Up-Table.

**7.** The method according to claim 1, wherein selecting a set of neighboring pixels comprises back-projecting a set of pixels from the second frame onto the first frame, said set of pixels being determined as a set of NxN pixels centered on the nearest pixel from the projected point in the second frame, N being an integer determined by a symmetric interpolation filter size, and wherein the interpolated value for the pixel is obtained by filtering the back-projected set of pixels using an overlapping filter.

**8.** The method according to claim 1, wherein selecting a set of neighboring pixels comprises:

- back-projecting a set of pixels from the second frame onto the first frame, said set of pixels being determined as a set of NxN pixels centered on the nearest pixel from the projected point in the second frame, N being an integer determined by a symmetric interpolation filter size,
- determining the set of neighboring pixels in the first frame by rectifying positions of the back-projected set of pixels using an affine transformation.

**9.** A method for omnidirectional video encoding comprising:

- processing frames of the omnidirectional video for converting said frames from an input mapping into an output mapping, wherein said processing is performed using the method according to any one of claims 1-9,
- encoding the omnidirectional video in the output mapping.

**10.** A method for omnidirectional video decoding comprising:

- decoding a bitstream representative of the omnidirectional video in an input mapping,
- processing frames of the decoded omnidirectional video for converting said frames from the input mapping into an output mapping, wherein said processing is performed using the method according to any one of claims 1-9.

**11.** An apparatus for determining an interpolated value for a pixel of a first frame, said first frame being an output mapping of an omnidirectional frame, the apparatus comprising:

- means for projecting said pixel from said first frame onto a second frame, said second frame being an input mapping of the omnidirectional frame and obtaining a projected point in the second frame,
- means for selecting a set of neighboring pixels of the projected point according to geometric distortion induced by converting the output mapping into the input mapping,
- means for filtering the adapted set of neighboring pixels to determine the interpolated value for the pixel.

**12.** The apparatus according to claim 11, wherein selecting a set of neighboring pixels comprises:

- projecting a set of pixels from the first frame onto the second frame, said set of pixels being determined as a set of NxN pixels centered on the pixel in the first frame, N being an integer determined by a symmetric interpolation filter size,
- computing at least a horizontal span or a vertical span in the second frame from the projected set of pixels.

**13.** The apparatus according to claim 11 or 12, further comprising means for encoding an omnidirectional video in the output mapping or means for decoding an omnidirectional video in the input mapping.

**14.** The apparatus according to claim 11 or 12, embedded in an encoder configured for encoding an omnidirectional video in the output mapping.

**15.** The apparatus according to claim 11 or 12, embedded in a decoder configured for decoding an omnidirectional video in the input mapping.

FIG.1

FIG.2A

FIG.3

FIG. 2B

FIG. 2C

Pixel in CMP     Projected sample in ERP     Neighbors selection in ERP

Interpolated value in CMP     Lanczos filtering in ERP

FIG.4

50 — Mapping to source

51 — Selection of neighbor

52 — Interpolation from neighboring pixels

53 — Copy to destination

FIG. 5

cube mapping image

ERP image

FIG. 6A

FIG. 6B

Mapping to source — 50

Adapting neighboring pixels — 70

Mapping neighboring pixels — 701

Computing horizontal/ vertical span — 702

Interpolation from neighboring pixels — 71

Copy to destination — 53

**FIG. 7**

project

Pixel in CMP

Projected point in ERP

Projected Neighbors in ERP

ER

Project back

Interpolated value in CMP

Assymetric filtering in ERP

**FIG. 8**

Generating mip-map pyramid — 90

Mapping to source — 50

Adapting neighboring pixels — 91

Selection of scale — 911

Selection of mipmap level — 912

Determining location of centered pixel — 913

Selection of neighbor — 914

Interpolation from neighboring pixels — 92

Copy to destination — 53

FIG. 9

Pixel in CMP

Projected point
in ERP

Compute scale in ERP

Apply Lacnzos in ERP

Select mipmap level

Interpolated value in
CMP

FIG. 10

EP 3 493 546 A1

FIG. 11

FIG. 12

FIG. 13

level

0

1

2

FIG. 14

Mapping to source ⟶ 50

Adapting neighboring pixels ⟶ 1500

Selection of neighbors ⟶ 51

Back-projecting neighbors ⟶ 1501

Interpolation from neighboring pixels ⟶ 1502

Copy to destination ⟶ 53

FIG. 15

Mapping to source ⟶ 50

Adapting neighboring pixels ⟶ 1700

Selection of neighbors ⟶ 51

Back-projecting neighbors ⟶ 1701

Rectifying back-projected pixels ⟶ 1702

Interpolation from neighboring pixels ⟶ 1703

Copy to destination ⟶ 53

FIG. 17

Select neigbhors in ERP

Back-projected points in CMP

project

Projected point in ERP

Apply filter in CMP

FIG. 16

Pixel in CMP

Interpolated value in CMP

FIG. 18

Pre-process ⟨1900

↓

Encoding ⟨1901

FIG. 19

| FIL | OVD |

FIG. 23

Decoding ⟨2000

↓

Post-process ⟨2001

FIG. 20

2120

2110

Memory

Processor

2100

2150

Communication
Interface

Storage
Device

2140

FIG. 21

2120

2110

2200

Memory

Processor

2150

2140

2230

Communication
Interface

Storage
Device

Encoder/
Decoder

FIG. 22

Europäisches
Patentamt

European
Patent Office

Office européen
des brevets

**EUROPEAN SEARCH REPORT**

Application Number

EP 17 30 6669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALGORITHM DESCRIPTIONS OF PROJECTION FORMAT CONVERSION AND VIDEO QUALITY METRICS IN 360LIB (VERSION 5): "Algorithm descriptions of projection format conversion and video quality metrics in 360Lib (Version 5)", 8. JVET MEETING; 18-10-2017 - 25-10-2017; MACAU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-H1004-v2, 18 November 2017 (2017-11-18), XP030151113, * sections 1-3 * * figures 1-5 * * table 14 * | 1-15 | INV. H04N19/597 G06T15/04 H04N19/59 G06T3/00 |
| A | HE Y ET AL: "AHG8: InterDigital's projection format conversion tool", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0021-v4, 15 October 2016 (2016-10-15), XP030150244, * sections 1, 2.1, 2.7, 3.1 * * tables 1, 4-6 * | 1-15 | |

-----

-----

-/--

TECHNICAL FIELDS
SEARCHED      (IPC)

H04N
G06T

The present search report has been drawn up for all claims

| Place of search | Date of completion of the search | Examiner |
|---|---|---|
| The Hague | 29 May 2018 | Mayer, Claudia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

Application Number

EP 17 30 6669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HE Y ET AL: "AHG8: Interpolation filters for 360 video geometry conversion and coding", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0073, 6 October 2016 (2016-10-06), XP030150306, * abstract * * sections 1-2 * * figure 1 * | 1-15 | |
| A | ALSHINA E ET AL: "JVET common test conditions and evaluation procedures for 360° video", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D1030, 12 November 2016 (2016-11-12), XP030150465, * sections 1-4 * * figure 1 * | 1-15 | |
| A | US 9 747 667 B1 (MELER ANTOINE [FR] ET AL) 29 August 2017 (2017-08-29) * column 4, line 48 - column 6, line 7 * * figures 3-5 * | 4-6 | TECHNICAL FIELDS SEARCHED (IPC) |

The present search report has been drawn up for all claims

| Place of search | Date of completion of the search | Examiner |
|---|---|---|
| The Hague | 29 May 2018 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6669

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2018

| Patent document cited in search report | Publication date | Patent family member(s) | Publication date |
|---|---|---|---|
| US 9747667 B1 | 29-08-2017 | NONE | |

EPO FORM P0459

For more details about this annex : see Official Journal of the European Patent Office, No. 12/82